Europäisches Patentamt

European Patent Office

Office européen des brevets

(19)

(11) EP 0 810 779 A1

(12) DEMANDE DE BREVET EUROPEEN

(43) Date de publication:
03.12.1997 Bulletin 1997/49

(51) Int Cl.⁶: H04N 5/217

(21) Numéro de dépôt: 97401159.5

(22) Date de dépôt: 27.05.1997

(84) Etats contractants désignés:
BE DE GB

(30) Priorité: 29.05.1996 FR 9606607

(71) Demandeurs:
• COMMISSARIAT A L'ENERGIE ATOMIQUE
75015 Paris (FR)
• COMPAGNIE GENERALE DES MATIERES
NUCLEAIRES
F-78140 Velizy Villacoublay (FR)

(72) Inventeurs:
• Giraud, Alain
91400 Orsay (FR)
• Chapuis, Jean-Claude
91430 Igny (FR)

(74) Mandataire: Dubois-Chabert, Guy et al
c/o BREVATOME
25, rue de Ponthieu
75008 Paris (FR)

(54) **Procédé et traitement de signaux de pixels dans une caméra à semi-conducteur, et caméra à semi-conducteur mettant en oeuvre ce procédé**

(57) La présente invention concerne un procédé de traitement des signaux de pixels dans une caméra à semi-conducteur, dans lequel on remplace le signal analogique propre à chaque pixel par le minimum des signaux analogiques reçus par ce pixel et quelques pixels environnants visualisant la même scène ou une scène très proche.

Elle concerne également une caméra à semi-conducteur mettant en oeuvre ce procédé.

FIG. 2A

IMAGE ORIGINE

IMAGE APRES TRAITEMENT SUR UNE SEULE IMAGE

## Description

Domaine technique

La présente invention concerne un procédé de traitement de signaux de pixels dans une caméra à semi-conducteur, par exemple une caméra CCD (Charge Coupled Device), et une caméra à semi-conducteur mettant en oeuvre ce procédé.

Etat de la technique antérieure

La surveillance et l'intervention dans les cellules de retraitement des usines de l'industrie nucléaire utilisent des caméras à tube dont l'obsolescence et les difficultés d'approvisionnement rendent leur maintenance de plus en plus difficile.

Les nouvelles technologies de caméras à capteurs solides semi-conducteurs, dont font partie les caméras CCD et pour lesquelles le marché est en expansion croissante, correspondent à une voie vers laquelle s'orientent les industriels du nucléaire.

Le principe physique retenu dans ce type de caméras est la conversion de l'énergie lumineuse (les photons) en grandeur mesurable (tension ou courant électrique). Le lien entre ces deux grandeurs est assuré par les électrons. il est donc important de bien maîtriser la création, la capture, le transfert de ces électrons et la mesure de la tension correspondante.

On va ci-dessous analyser successivement chacun de ces points :

- Création des électrons :

Le capteur utilisé est généralement un circuit intégré silicium de type MOS comprenant un substrat de silicium recouvert d'une couche d'oxyde sur laquelle repose une matrice d'électrodes très proches les unes des autres et constituées de matériaux semi-transparents. Lorsqu'une image est focalisée sur cette matrice, les photons émis, après avoir traversé l'électrode, pénètrent dans le substrat où ils cèdent de l'énergie en créant des paires électrons-trous. Il suffit ensuite de capturer les électrons et de laisser les trous se recombiner dans le substrat.

- Capture des électrons :

La séparation des électrons se fait par application d'un champ électrique sur l'électrode. Les électrons y sont retenus tandis que les trous diffusent dans le substrat. La cellule photosensible ainsi formée s'appelle un pixel.

Pour que le signal fourni par les électrons soit suffisamment important pour être détecté, il est nécessaire d'accumuler, pendant un certain temps, les électrons issus de l'interaction de substrat-photons. Ce temps s'appelle le « temps d'intégration ».

- Transfert des électrons :

Le transfert des charges électriques du site d'intégration vers le site de mesure utilise le plus souvent des registres à décalage constitués de cellules identiques à celles décrites ci-dessus. Par un jeu approprié d'horloges, les informations sont transportées de cellules en cellules jusqu'à la sortie où elles sont alors converties en grandeur facilement mesurable (tension).

Les capteurs CCD utilisés sur les caméras standard sont donc constitués de deux groupes de cellules : celles nécessaires à la captation et l'accumulation des électrons issus de l'interaction substrat-photons et celles, protégées de la lumière, nécessaires au transfert vers la sortie. Ce second groupe est constitué soit sous forme de matrice, soit sous forme de colonnes insérées entre chaque colonne de cellules actives.

L'information lumineuse acquise par chaque pixel est recopiée en une fois dans la cellule de transfert correspondante. Ensuite, les informations sont transférées de cellule en cellule puis converties en tension et formatées selon un protocole défini avant d'être exploitées par un moniteur vidéo ou une carte d'acquisition d'images.

Les problèmes introduits par la présence des rayonnements Gamma dans l'environnement du capteur sont les suivants :

- Tenue à la dose intégrée :

Certaines caméras deviennent non opérationnelles après avoir reçu quelques dizaines de Gy. D'autres présentent un assombrissement de l'image qui s'accentue sous l'effet de l'intégration de dose.

- Tenue au débit de dose :

Le rayonnement Gamma agit comme le rayonnement lumineux. Il engendre des électrons parasites captés par les électrodes des pixels touchés. Ceci a pour effet d'accroître les charges collectées et donne, après transfert et conversion, cette multitude de points blancs répartis aléatoirement dans l'espace et dans le temps communément appelé « effet de neige ». Ce phénomène pénalise fortement la perception des scènes observées par les opérateurs.

La densité de ce phénomène s'amplifie lorsque le débit de dose augmente. Au-delà d'un seuil de l'ordre de quelques centaines de Gy/h, les images sont inexploitables, ce qui, dans le contexte du nucléaire n'est pas concevable.

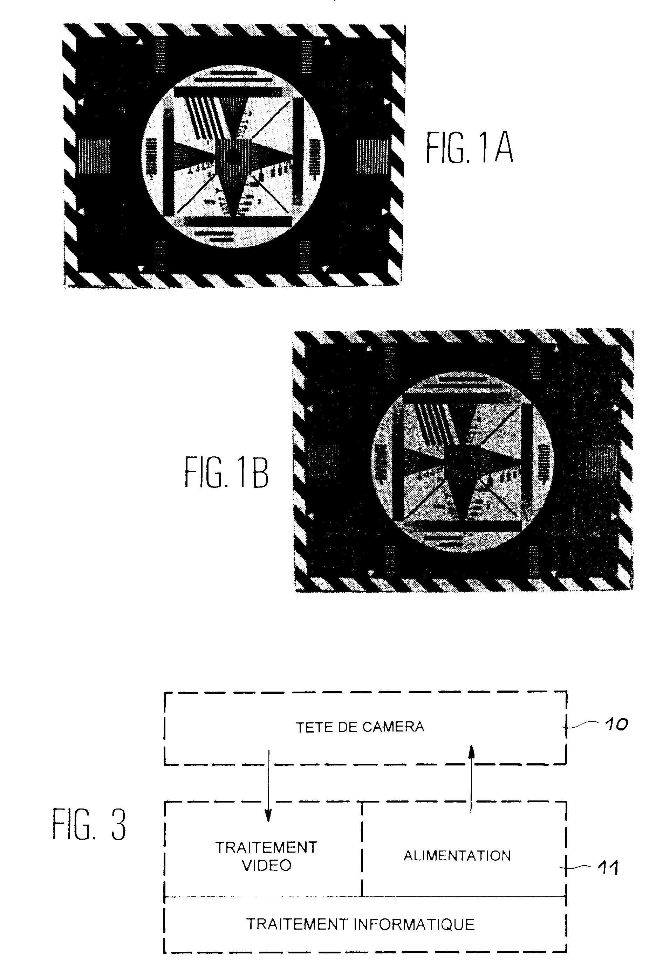

Les figures 1A et 1B montrent la sensibilité au débit de dose obtenue d'un capteur respectivement pour des débits de 100 Gy/h et 1kGy/h.

Si l'effet d'assombrissement peut se compenser partiellement par une augmentation de la luminosité pour les caméras supportant la dose intégrée, il n'en est pas forcément de même pour l'effet de neige. Le problème de l'utilisation des caméras CCD en ambiance radiative est ainsi posé.

Pour résoudre ce problème, différentes solutions existent :

- conception de caméras prévues pour tolérer les radiations : certains fabricants proposent des caméras résistantes au rayonnement Gamma, jusqu'à 10kGy, voire 200 kGy. Des caméras ayant cette particularité technologique restent toutefois d'un coût élevé ;

- traitement en temps réel des images : après acquisition et numérisation des images, un système de traitement d'images utilisant une architecture particulière de calculateurs, spécialisés ou non, effectue un filtrage des informations acquises. Les images traitées sont ensuite visualisées par les opérateurs. Les simulations de traitements classiques des images (moyenne, médian, gradient) n'ont, d'autre part, pas donné de résultats suffisamment significatifs sur la qualité de l'image traitée.

Si pour les caméras de surveillance, où prédomine avant tout la dose intégrée (au-delà de 100 kGy), l'utilisation de caméras spécialisées est envisageable, il n'en est pas de même pour les caméras d'intervention. Mises au rebut après leur premier et unique usage, leur coût doit rester faible. De plus, c'est avant tout les effets induits par le débit de dose qui prédominent, la dose intégrée étant la plupart du temps inférieure à 1 kGy.

L'invention a pour objet de réduire "l'effet de neige" qui apparaît dans une caméra à capteur semi-conducteur, en particulier une caméra CCD, les rayonnements ionisants, et plus précisément leur débit de dose, créant alors des points brillants superposés aléatoirement sur l'image.

Exposé de l'invention

L'invention a pour objet un procédé de traitement des signaux de pixel dans une caméra à semi-conducteur, dans lequel on diminue très fortement cet effet en remplaçant le signal propre à chaque pixel par le minimum des signaux reçus par ce pixel et quelques pixels dits environnants visualisant la même scène ou une scène très proche.

Avantageusement les signaux sont des signaux analogiques, et le traitement est un traitement temps réel.

Les pixels environnants peuvent être :

- des pixels voisins situés sur la même ligne sur une même image ;
- des pixels voisins situés sur la même colonne sur une même image ;

- des pixels voisins situés sur la même image, autour du pixel considéré ;
- des pixels de même rang (ligne et colonne identiques) mais situé sur des images différentes de la même scène.

Une image différente de la même scène se définit comme :

- une image consécutive dans le temps issue du même capteur ;
- une image prise simultanément sur des capteurs différents visualisant la même scène.

L'invention concerne aussi tout système de traitement d'images utilisant un ou plusieurs calculateurs spécialisés ou non, mettant en oeuvre ledit procédé sur des images numérisées préalablement.

L'invention concerne également une caméra à semi-conducteur qui comprend un module mettant en oeuvre le procédé de l'invention. Cette caméra peut être une caméra CCD « bi-bloc » comprenant d'une part une tête de caméra comportant un capteur CCD, des horloges et un séquenceur, un prétraitement du signal, et d'autre part des traitements classiques du signal, des alimentations, ledit module étant inséré dans la tête de la caméra.

Avantageusement ledit module est situé dans la partie prétraitement vidéo après une amplification.

Dans un premier exemple de réalisation ladite caméra étant une caméra monocapteur, ledit module comprend deux lignes à retard en série, chaque ligne à retard permettant de retarder la valeur analogique d'entrée d'une durée égale à la période séparant la lecture de la valeur analogique de deux pixels consécutifs sur une même ligne, la valeur analogique d'entrée et la valeur analogique de sortie de chacune des lignes à retard étant reliées à un sélecteur de minimum.

Dans un second exemple de réalisation, ladite caméra étant une caméra monocapteur, ledit module comprend deux lignes à retard en série, chaque ligne à retard permettant de retarder la valeur analogique d'entrée d'une durée égale à la période séparant la lecture de la valeur analogique de deux pixels consécutifs sur une même colonne, la valeur analogique d'entrée et la valeur analogique de sortie de chacune des lignes à retard étant reliées à un sélecteur de minimum.

Dans un troisième exemple de réalisation, ladite caméra étant une caméra tri-CCD, les valeurs analogiques sont issues de pixels de même position ligne et colonne sur des capteurs différents. Ils sont directement reliés au sélecteur de minimum.

Les domaines pour lesquels l'invention présente une innovation importante sont notamment :

- le domaine nucléaire ;
- le domaine médical utilisant des environnements radiatifs :

- le domaine spatial.

Brève description des dessins

- La figure 1A illustre un effet de neige à 100 Gy/h ;
- la figure 1B illustre un effet de neige à 1 kGy/h ;
- les figures 2A et 2B illustrent le procédé de l'invention : la figure 2A illustrant le principe de remplacement de la valeur de pixels aberrants sur une image ; et, la figure 2B illustrant le principe de remplacement de la valeur d'un pixel aberrant sur plusieurs images ;
- la figure 3 illustre un synoptique d'un exemple de caméra bi-bloc de l'art connu ;
- la figure 4 illustre le synoptique d'une caméra monocapteur CCD ;
- la figure 5 illustre le synoptique d'une caméra tricapteur CCD ;
- la figure 6 illustre une fonction "prétraitement vidéo" ;
- la figure 7 illustre le module de mise en oeuvre du procédé de l'invention pour une caméra monocapteur ;
- la figure 8 illustre le module de mise en oeuvre du procédé de l'invention pour une caméra tri-CCD ;
- la figure 9 illustre un exemple de module sélecteur de minimum.

Exposé détaillé de modes de réalisation

L'analyse des images acquises pendant les campagnes d'essais de plusieurs caméras ou capteurs CCD standard a permis de caractériser l'effet de neige induit par le débit de dose.

L'effet de neige correspond à un dépôt d'énergie cédé par les rayonnements ionisants dans chaque site photosensible (pixel). Ce dépôt vient s'ajouter à celui déposé par le flux lumineux.

L'aspect probabiliste de la distribution spatiale et temporelle conduit à une dispersion importante du nombre de charges accumulées dans chaque site et sur chaque image. De plus, aucun débordement d'un site affecté sur ses voisins n'a été observé aux débits utilisés (inférieurs ou égaux à 1kGy/h).

L'information lumineuse de la scène contenue dans chaque pixel atteint est donc modifiée par l'ajout d'une quantité positive liée au débit de dose.

En l'absence de connaissances préalables sur la scène observée, le bruit induit par le débit de dose peut être considérablement diminué en utilisant la redondance d'informations contenue dans la scène observée. Selon l'invention, par analogie avec le traitement des pannes aléatoires sur les systèmes électroniques par exemple, la diminution ou la suppression de ce bruit est envisagé en considérant l'information apportée par plusieurs pixels visualisant une même scène ou une scène extrêmement proche.

Par rapport à un pixel donné de rang quelconque (ligne, colonne), la redondance peut être obtenue en considérant les pixels visualisant la même scène ou une scène extrêmement proche, appelés « pixels environnants ». Ces pixels sont définis comme suit :

- pixel voisin situé sur la même ligne sur une même image ;
- pixel voisin situé sur la même colonne sur une même image ;
- pixel voisin situé sur la même image, autour du pixel considéré ;
- pixel de même rang (ligne et colonne identiques) mais situé sur des images différentes de la même scène.

Par rapport à une image quelconque, une image différente de la même scène se définit comme :

- une image consécutive dans le temps issue du même capteur ;
- ou une image prise simultanément sur des capteurs différents visualisant la même scène.

Selon l'invention on obtient une amélioration significative de la qualité de l'image après traitement en remplaçant la valeur analogique lue sur un pixel par la valeur analogique la plus faible lue sur les pixels environnants.

Lorsque la densité reste faible (débit de dose inférieur à 500 Gy/h), il est possible de s'affranchir efficacement des désagréments visuels de l'effet de neige. Cette constatation est d'autant plus accentuée lorsque les pixels sont issus d'images différentes et que le nombre d'images est important.

L'association d'un module simple mettant en oeuvre ce traitement particulier des images et d'un capteur (ou famille de capteurs) CCD standard dont la tenue à la dose soit remarquable, permettent d'envisager la réalisation d'une caméra d'intervention satisfaisant à la fois des critères de coût et de rendu d'images nécessaires aux opérateurs.

L'invention réside donc essentiellement dans le principe de remplacement de la valeur d'un pixel par la valeur la plus faible des pixels environnants tels que définis ci-dessus.

On va, à présent, analyser plusieurs simulations d'algorithmes effectuées sur les images en mettant en oeuvre le procédé de l'invention, puis décrire un exemple de module implémentant l'invention dans une caméra d'intervention.

Afin d'estimer et de valider l'intérêt qu'apporte l'invention sur la qualité des images traitées, une simulation par traitements algorithmiques a été effectuée sur plusieurs images caractéristiques de l'effet du débit de dose.

Deux types de traitements ont été réalisés :

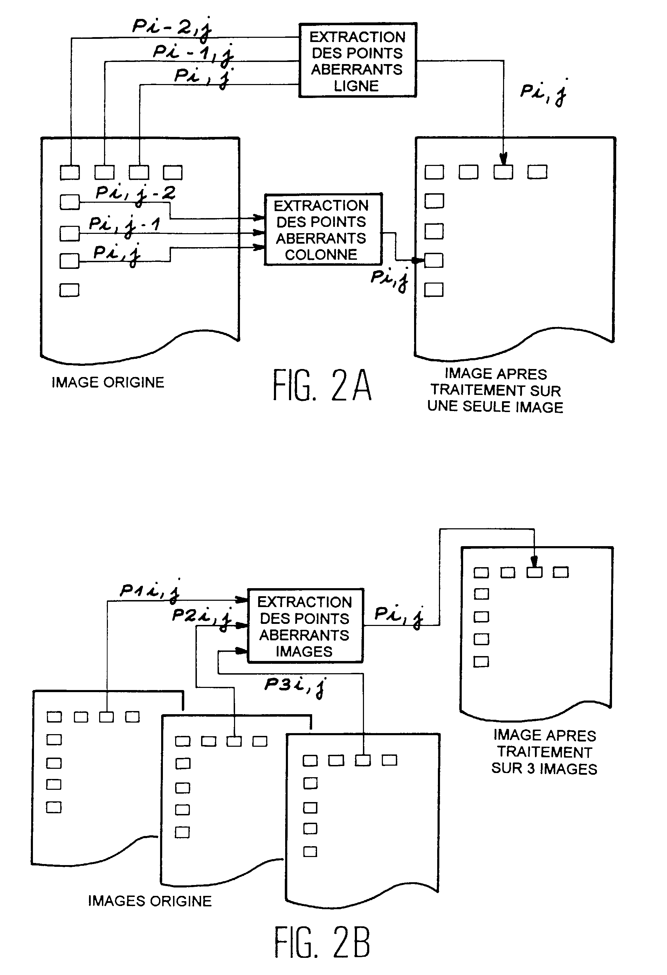

- Un premier traitement sur une seule image selon le schéma de la figure 2A :

Ce traitement représente le cas où un capteur observe la scène. La valeur attribuée à chaque pixel de l'image après traitement correspond à la valeur la plus faible de l'un des trois pixels suivants de l'image origine :

- pixel considéré P(i,j) ;
- pixel voisin ligne P(i-1,j) ou pixel voisin colonne P(i,j-1) ;
- pixel voisin ligne P(i-2,j) ou pixel voisin colonne P(i,j-2).

Les pixels voisins sont prélevés soit sur une même ligne, soit sur une même colonne.

- Un second traitement sur trois images selon le schéma de la figure 2B :
  Ce traitement représente deux cas :

  - un capteur observe une scène fixe (ou très peu dynamique) ; les images de la scène sont consécutives dans le temps ;
  - trois capteurs observent la même scène statique ou dynamique ; les images de la scène sont simultanées.

La valeur attribuée à chaque pixel de l'image après traitement correspond à la valeur la plus faible de l'un des pixels de même position sur chacune des images origine.

Une quantification des résultats de ces traitements pour des images prise à différents débits par une caméra CCD à un éclairage donné a été effectuée en utilisant :

- un estimateur mathématique représentant une dispersion autour de l'espérance mathématique de la distribution de la différence entre l'image avant et après la mise en place de la source d'irradiation ;
- un estimateur visuel fait par plusieurs personnes sur les images prises pendant l'irradiation et après avoir effectué les traitements.

Jusqu'à des débits de 300 Gy/h, voire 500 Gy/h, le deuxième traitement permet de restituer une image très proche d'une image sans débit de dose. Au-delà, il est nécessaire d'accumuler beaucoup plus d'images pour améliorer le traitement. Le premier traitement reste efficace jusqu'à 300 Gy/h. Au-delà, la définition des images devient pénalisante.

La mise en oeuvre du procédé de l'invention dans un module particulier au sein d'une caméra procure un avantage technique appréciable pour les opérateurs amenés à exécuter des manipulations sous ambiance radiative. Chaque image fournie n'est plus l'image réelle de la scène observée mais l'image filtrée par ce module.

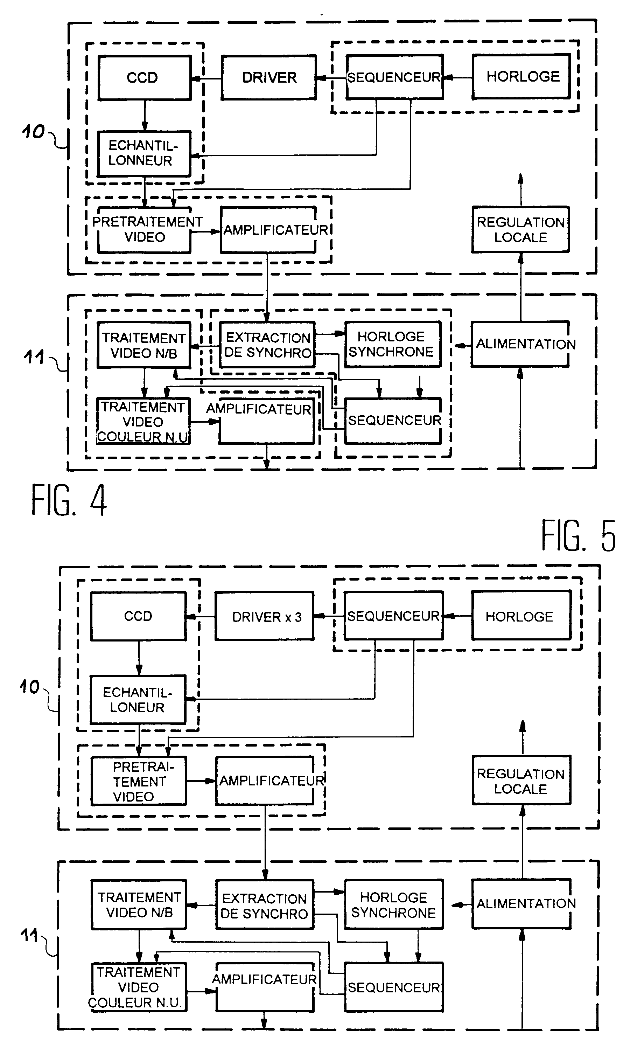

La figure 3 représente le synoptique simplifié d'une caméra CCD appelée « bi-bloc » utilisable lorsqu'il est nécessaire, pour des raisons particulières, de limiter les fonctionnalités embarquées dans la tête de la caméra. L'environnement radiatif en est un exemple.

Deux blocs la composent :

- le premier bloc 10, appelé tête de caméra, directement soumis aux radiations, comprend :

  - le capteur CCD,
  - les horloges et le séquenceur ; Comme il a été rappelé ci-dessus, l'extraction des informations de l'ensemble des pixels du capteur nécessite l'exécution d'une succession de phases dont il est important de garantir le respect du cadencement ; ces contraintes conduisent en général à ne pas dissocier le capteur de son électronique de commande,
  - le prétraitement du signal ; afin de limiter les informations transférées vers le poste SOL, une première mise en forme du signal est effectuée dans la tête de caméra.

  Toutes ces fonctions sont réalisées à partir de composants électroniques agencés de manière à supporter les radiations.

- le deuxième bloc 11, hors zone radiative, comprend les traitements classiques du signal sur une caméra CCD (correcteur Gamma pour compenser les distorsions d'un écran de moniteur vidéo, ..), les alimentations et éventuellement des traitements informatiques de haut niveau (avec extraction minimum sur plusieurs trames).

Plusieurs variantes d'une telle caméra existent, selon que l'on souhaite ou non limiter le nombre de fonctions dans la tête en utilisant un câble d'interconnexion plus complexe. Néanmoins, la mise en oeuvre de l'invention ne s'en trouve pas affectée.

Il est important en effet que le module permettant la mise en oeuvre du procédé de l'invention, qui est un module électronique simple, puisse s'insérer dans la tête de caméra, de manière à filtrer le plus tôt possible les signaux des pixels bruités par l'effet de débit de dose.

La figure 4 détaille l'une de ces variantes pour une architecture de caméra monocapteur CCD noir et blanc, qui est bien connue de l'homme de l'art. Seule la partie 10, en zone radiative, est considérée pour la mise en oeuvre de l'invention.

La figure 5 représente une architecture de caméra tri-CCD noir et blanc, qui est bien connue de l'homme de l'art. Par rapport à l'architecture précédente, elle comporte trois capteurs identiques associés chacun à une fonction "échantillonneur".

Le transfert de l'information vers la fonction "échantillonneur" est réalisée en respectant des chronogrammes très précis gérés par les fonctions "horloge" et "séquenceur".

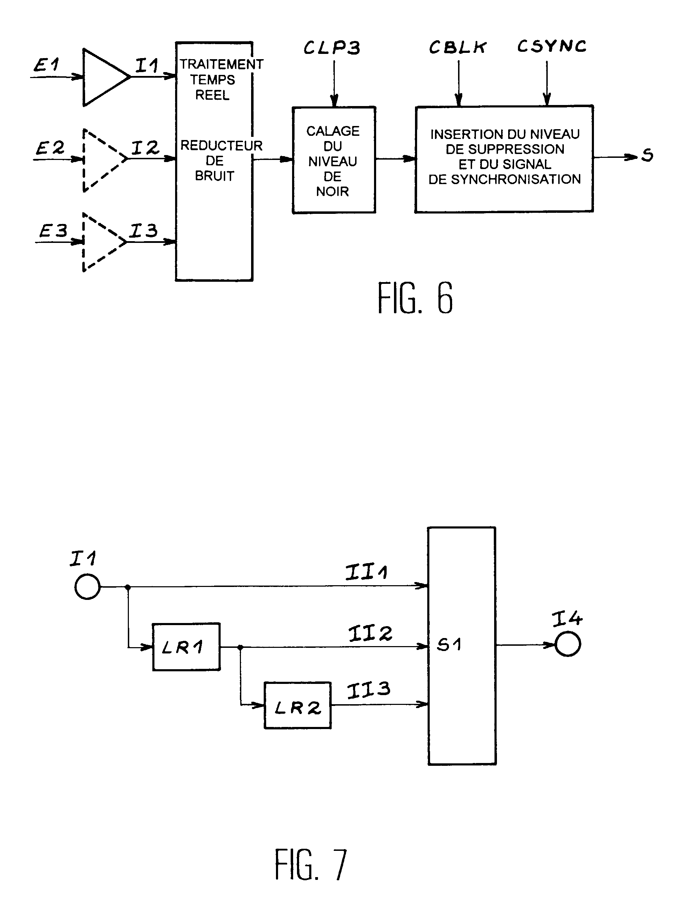

Il en est de même pour le transfert vers la fonction "prétraitement vidéo" représentée sur la figure 6.

Soit E1 la valeur analogique de ce pixel pour l'architecture monocapteur (E2 et E3 correspondent aux valeurs analogiques issues des capteurs 2 et 3 dans l'architecture tri-CCD).

La première sous-fonction, l'amplification, permet de fournir un signal I1 (I2, I3) exploitable même lorsque l'information EI (E2, E3) est d'un niveau très faible.

La seconde sous-fonction "traitement temps réel réducteur de bruit" ou plus simplement "réducteur de bruit" correspond précisément au module électronique implémentant le procédé de l'invention.

Suivant que l'on travaille avec une caméra monocapteur ou avec une caméra tri-CCD, deux implémentations sont possibles pour la mise en oeuvre de l'invention.

Un module réducteur de bruit pour caméra monocapteur est représenté sur la figure 7.

LR1 et LR2 sont deux lignes à retard permettant de retarder la valeur analogique II d'une durée égale à la période séparant la lecture de la valeur analogique de deux pixels consécutifs sur une même ligne.

Ainsi si II1 représente la valeur analogique d'un pixel P(i,j), alors II2 représente la valeur analogique du pixel précédent P(i-1,j) et II3 celle du pixel P(i-2,j).

Le sélecteur de minimum S1 effectue l'opération :

$$I4=\min(II1,II2,II3)=\min(VP(i,j),VP(i-1,j),VP(i-2,j))$$

On réalise ainsi un module réducteur de bruit implémentant le principe de l'invention sur une caméra monocapteur en prenant pour un pixel donné la valeur minimum entre celle de ses deux prédécesseurs et lui-même.

Ce principe peut s'envisager également pour l'utilisation avec des pixels contigus sur une même colonne. Il suffit pour cela d'adapter les lignes à retard à une durée égale à celle séparant la lecture des valeurs de deux pixels consécutifs d'une même colonne.

Le premier traitement utilisé en simulation correspond à ce type de module électronique.

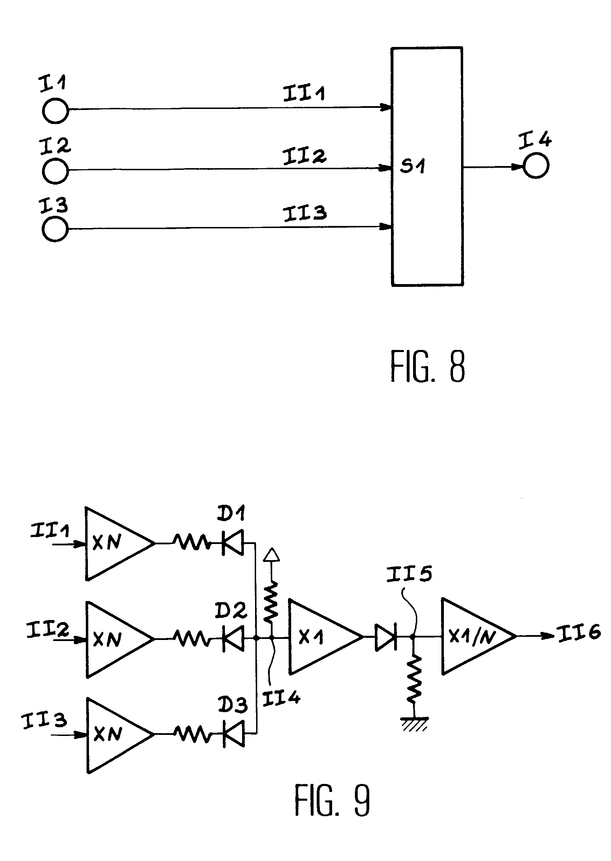

Un module réducteur de bruit pour caméra tri-CCD est représenté sur la figure 8.

Les valeurs analogiques I1, I2 et I3 correspondent au pixel P(i,j) sur chacun des capteurs.

Le sélecteur de minimum S1, identique au précédent, effectue l'opération :

$$I4=\min(II1,II2,II3)=\min(VP1(i,j),VP2(i,j),VP3(i,j))$$

On réalise ainsi un module réducteur de bruit implémentant le principe de l'invention sur une caméra tri-CCD en prenant pour une position de pixel donné la valeur minimum donnée par les trois capteurs.

La mise en oeuvre du module sélecteur de minimum sous forme de circuit électronique permet de maintenir un objectif de coût réduit et de facilité d'implantation. Un exemple est montré sur la figure 9.

Les valeurs des pixels à comparer II1, II2, II3 sont amplifiées et mises en forme avant d'être comparées par le jeu de diodes D1, D2 et D3. La valeur analogique II4 correspond à la valeur la plus faible de II1, II2 et II3. Il y a ensuite restitution de la valeur minimale d'origine par une nouvelle mise en forme (II5 et II6).

## Revendications

1. Procédé de traitement des signaux de pixel dans une caméra à semi-conducteur, caractérisé en ce qu'on remplace le signal propre à chaque pixel par le minimum des signaux reçus par ce pixel et au moins un pixel environnant visualisant la même scène ou une scène proche.

2. Procédé selon la revendication 1, caractérisé en ce que le traitement est un traitement temps réel.

3. Procédé selon la revendication 1, caractérisé en ce que les signaux sont des signaux analogiques.

4. Procédé selon la revendication 1, caractérisé en ce que les pixels environnant sont des pixels voisins situés sur la même ligne sur une même image.

5. Procédé selon la revendication 1, caractérisé en ce que les pixels environnants sont des pixels voisins situés sur la même colonne sur une même image.

6. Procédé selon la revendication 1, caractérisé en ce que les pixels environnants sont des pixels voisins situés sur la même image, autour du pixel considéré.

7. Procédé selon la revendication 1, caractérisé en ce que les pixels environnants sont des pixels de même rang mais situés sur des images différentes de la même scène.

8. Procédé selon la revendication 7, caractérisé en ce qu'une image différente de la même scène est une image consécutive dans le temps issue du même capteur.

9. Procédé selon la revendication 7, caractérisé en ce qu'une image différente de la même scène est une image prise simultanément sur des capteurs différents visualisant la même scène.

10. Procédé selon la revendication 1, caractérisé en ce que le traitement est réalisé sur des images numérisées préalablement.

11. Caméra à semi-conducteur, caractérisée en ce que, ladite caméra étant une caméra monocapteur ou pluri-capteurs, elle comprend au moins un module mettant en oeuvre le procédé selon l'une quelconque des revendications précédentes.

12. Caméra selon la revendication 11, caractérisée en ce que, ladite caméra étant une caméra CCD « bibloc », elle comprend d'une part une tête de caméra comportant un capteur CCD, des horloges et un séquenceur, un prétraitement du signal, et d'autre part des traitements classiques du signal, des alimentations, ledit module étant inséré dans la tête de la caméra.

13. Caméra selon la revendication 12, caractérisé en ce que ledit module est situé dans la partie prétraitement vidéo après une amplification.

14. Caméra selon la revendication 12, caractérisée en ce que, ladite caméra étant une caméra monocapteur, ledit module comprend deux lignes à retard (LR1, LR2) en série, chaque ligne à retard permettant de retarder la valeur analogique d'entrée d'une durée égale à la période séparant la lecture de la valeur analogique de deux pixels consécutifs sur une même ligne, la valeur analogique d'entrée et la valeur analogique de sortie de chacune des lignes à retard étant reliées à un sélecteur de minimum.

15. Caméra selon la revendication 12, caractérisée en ce que, ladite caméra étant une caméra monocapteur, ledit module comprend deux lignes à retard (LR1, LR2) en série, chaque ligne à retard permettant de retarder la valeur analogique d'entrée d'une durée égale à la période séparant la lecture de la valeur analogique de deux pixels consécutifs sur une même colonne, la valeur analogique d'entrée et la valeur analogique de sortie de chacune des lignes à retard étant reliées à un sélecteur de minimum.

16. Caméra selon la revendication 12, caractérisé en ce que, ladite caméra étant une caméra tri-CCD, les valeurs des pixels à comparer (II1, II2, II3) sont issues de pixels de même position ligne et colonne sur des capteurs différents et directement liées au sélecteur de minimum.

FIG.1A

FIG.1B

FIG. 3

FIG. 2A

IMAGE ORIGINE

IMAGE APRES TRAITEMENT SUR UNE SEULE IMAGE

FIG. 2B

IMAGES ORIGINE

IMAGE APRES TRAITEMENT SUR 3 IMAGES

FIG. 4

FIG. 5

EP 0 810 779 A1

FIG. 6

FIG. 7

11

I1 ○ ——————— II1 ——————→ │ S1 │ ——→ I4 ○

I2 ○ ——————— II2 ——————→

I3 ○ ——————— II3 ——————→

## FIG. 8

II1 →│ XN │——⌇—▷│ D1

II2 →│ XN │——⌇—▷│ D2 ——→│ X1 │—▷— II5 —│ X1/N │——→ II6

II3 →│ XN │——⌇—▷│ D3

II4

## FIG. 9

**Office européen des brevets**

## RAPPORT DE RECHERCHE EUROPEENNE

Numero de la demande

EP 97 40 1159

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | GB 2 251 152 A (GEC FERRANTI DEFENCE SYST) 24 Juin 1992<br>* page 3, ligne 1-7 *<br>* page 4, ligne 17 - page 5, ligne 23 * | 1-3,7-11 | H04N5/217 |
| A | | 4-6, 12-16 | |
| | --- | | |
| X | US 5 049 995 A (SHIMONI YAIR) 17 Septembre 1991<br>* colonne 1, ligne 47 - ligne 57 *<br>* colonne 3, ligne 27 - ligne 53 * | 1,11 | |
| A | | 2-10, 12-16 | |
| | --- | | |
| A | US 5 367 154 A (PFEIFFER CARL G) 22 Novembre 1994<br>* colonne 2, ligne 2 - ligne 6 *<br>----- | 1-16 | |

**DOMAINES TECHNIQUES RECHERCHES (Int.Cl.6)**

H04N

Le présent rapport a été établi pour toutes les revendications

| Lieu de la recherche | Date d'achèvement de la recherche | Examinateur |
|---|---|---|
| LA HAYE | 10 Juillet 1997 | Bequet, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant